# FASCICULE DE BREVET EUROPEEN

(11) **EP 0 512 134 B1**
(45) Date de publication et mention de la délivrance du brevet: **09.08.1995**
(21) Numéro de dépôt: 91107282.5
(22) Date de dépôt: 06.05.1991
(51) Int. Cl.: A01J 25/00, B65G 17/36

(54) **Procédé et appareil de fabrication de fromage**
Verfahren und Vorrichtung für die Herstellung von Käse
Cheese making method and apparatus

(43) Date de publication de la demande: 11.11.1992
(73) Titulaire: SOCIETE DES PRODUITS NESTLE S.A., 1800 Vevey (CH)
(72) Inventeur: Prella, Giovanni, Vercelli (IT); Bolioli, Giuseppe Fortunato, Moretta,(Prov. di Cuneo) (IT)

(56) Documents cités:
- GB-A- 1 150 403
- US-A- 2 657 993
- US-A- 3 482 507
- US-A- 4 309 941
- AUSTRALIAN JOURNAL OF DAIRY TECHNOLOGY. vol. 31, no. 4, Décembre 1976, PARKVILLE AU pages 128 - 133; I.P. BROCKWELL: 'RECENT DEVELOPMENTS IN CHEESEMAKING EQUIPMENT' page 131, colonne de gauche, ligne 1 - ligne 6; figure 3

## Description

L'invention concerne un procédé et un appareil pour l'égouttage en continu d'un caillé pour fromage à pâte filée, notamment de Mozzarella.

Parmi les fromages à pâte filée, la Mozzarella, du type frais, se présente conditionnée hermétiquement en sachet sous forme de boules immergées dans un liquide. La pâte est blanche, de structure fibreuse mais spongieuse et le goût délicat, doux et faiblement salé.

Traditionnellement pour préparer la Mozzarella, on standardise la matière grasse du lait, on pasteurise le lait, on additionne des cultures lactiques à base de Streptococcus thermophilus, puis on coagule le lait par la présure et on découpe le caillé en grains de la taille d'une noix-noisette. On réalise ensuite l'égouttage, qui est une phase critique du procédé, de manière à conférer à la masse de caillé le degré d'extrait sec et le point de filature convenables grâce aux interventions des opérateurs et à la fermentation lactique. Le point de filature est le degré de déminéralisation du caillé permettant d'atteindre la plasticité maximale de la pâte par réchauffement. C'est durant la phase d'égouttage que le caillé se ressoude pour donner un "préfromage".

La phase d'égouttage doit être conduite lentement avec beaucoup d'attention. Elle est effectuée par charges, dans des gouttières placées sur des chariots, ce qui demande une manutention et une immobilisation des sols considérables. Après l'égouttage, le préfromage se présente sous forme de pains que l'on découpe en blocs prêts à être filés.

La filature consiste à traiter un bloc de préfromage obtenu en fin d'égouttage, de pH et d'extrait sec bien définis, découpé en morceaux dans l'eau chaude dans un pétrin pour obtenir une masse spongieuse et élastique qui peut être facilement dosée, formée en boules, puis durcie par immersion dans l'eau froide et ensuite conditionnée en sachet.

Par opposition à la fabrication traditionnelle, de type européen, la fabrication industrielle réalisée principalement aux Etats-Unis comprend une acidification à l'aide de l'acide citrique qui présente l'avantage, si les paramètres d'acidification sont bien contrôlés, de ne pratiquement pas nécessiter d'égouttage, le caillé pouvant en somme être filé directement. Cependant, les caractéristiques du produit fini, en particulier son pH d'environ 6, sa couleur blanchâtre, son goût doucereux, sa moindre conservation nécessitant un circuit de distribution réfrigérée à 4-6°C, le distinguent du produit traditionnel de type européen de pH 5,1-5,2, de couleur légèrement jaunâtre, de goût aromatique de lait fermenté et de bonne conservation réfrigérée autour d'environ 8-10°C.

Si les opérations de coagulation et de filature pouvaient se réaliser en continu, c'est-dà-dire être mécanisées sans problème, ce n'était pas jusqu'à présent le cas de l'égouttage rendu nécessaire dès que la technique comprenait une acidification biologique, c'est-à-dire soit uniquement biologique soit mixte, à savoir en partie avec de l'acide citrique ou lactique et en partie par l'action des ferments lactiques.

On connaît un procédé et un appareil d'égouttage en continu de caillé destiné à la fabrication du Cheddar, décrits dans le brevet US-A-4,309,941. L'appareil en question permet de former en continu un gâteau de caillé dans des conditions contrôlées, en mouvement entre des parois fixes verticales, grâce à un système de plusieurs convoyeurs enfermés dans une enceinte sur lesquels le lit de caillé est successivement déversé. L'examen critique de cet appareil a montré qu'il n'était pas adapté à la fabrication de la Mozzarella. La formation d'un lit unique de caillé, plus ou moins épais, soumis à des contraintes mécaniques irrégulières pendant sa progression du fait des forces de traction conduit à produire une peau coiffant le préfromage qui empêche l'égouttage progressif et une déminéralisation homogène du préfromage conduisant à un caillé égoutté au pH voulu. Par ailleurs, le déversement et le transfert du lit de caillé ne sont pas réguliers. Ces conditions ne conviennent pas pour la filature .

On connaît également, pour la fabrication du Cheddar, un procédé et appareil AUSTRALIAN JOURNAL OF DAIRY TECHNOLOGY, vol. 31, no. 4, Décembre 1976, PARKVILLE AU, pages 128 - 133; I.P. BROCKWELL: 'RECENT DEVELOPMENTS IN CHEESEMAKING EQUIPMENT', ainsi qu'un élément constituant un maillon de chaîne (GB-A-1150403) selon le préambule des revendications 1, 3 et 9.

L'invention permet de bien maîtriser l'égouttage et l'évolution de la fermentation lactique en continu d'un caillé pour fromage à pâte filée, notamment de Mozzarella, en mettant à disposition un procédé et une installation d'égouttage mécanisé.

L'invention concerne donc un procédé de fabrication de fromage dans lequel après ensemencement et caillage du lait, découpage du caillé et séparation du petit-lait, on transfère le caillé en grains sur un convoyeur à chaîne sans fin sur lequel on réalise l'égouttage et la fermentation lactique en mouvement et en continu, puis on décharge le caillé égoutté. Le procédé, selon la revendication 1, est caractérisé par le fait que l'on réalise un égouttage statique du caillé pendant lequel on forme des pains dans des caissettes constituant les maillons de la chaîne, ouvertes au-dessus et sur l'un de leur grand côté de manière à réaliser l'égouttage statique propre à l'obtention de préfromage apte à être filé tout en transportant les pains; on transfère rapidement le caillé en grains sur un premier convoyeur élévateur à chaîne sans fin et on le déverse sur un deuxième convoyeur puis on transfère les pains formés sur un troisième convoyeur.

Selon l'invention, l'égouttage statique et la fermentation réalisés sur le second et le troisième convoyeur en mouvement évitent la formation d'un lit unique de caillé entouré d'une peau quasiment imperméable. Le préfromage en fin d'opération a les caractéristiques voisines de celui obtenu par le procédé traditionnel permettant sa filature dans de bonnes conditions.

Ceci est réalisé par la forme des éléments unitaires articulés du deuxième et du troisième convoyeur que constituent les caissettes ouvertes sur le dessus et sur l'avant, vu dans le sens de cheminement des convoyeurs. Pendant l'avancement de ces convoyeurs, les caissettes, en étant contigues, forment une série de moules pour recevoir le caillé, comportant entre eux des fentes pour assurer l'écoulement du petit-lait. L'égouttage est ainsi facilité par l'effet de paroi des caissettes.

Par ailleurs, le transfert et le renversement des pains du deuxième au troisième convoyeur puis le transfert du troisième convoyeur vers une table de découpe en blocs de la taille désirée est assuré de manière accompagnée par des plaques courbes et également par des tablettes escamotables superposées entre le deuxième et le troisième convoyeur, de manière à adoucir leur chute par gravité.

L'invention concerne également un appareil de fabrication de fromage, comprenant un premier convoyeur élévateur à chaîne sans fin pour le transfert du caillé en grains et la décharge des grains. L'appareil, selon la revendication 3, comprend un second convoyeur à chaîne sans fin horizontal, puis un troisième convoyeur à chaîne sans fin horizontal situé sous le second convoyeur et cheminant en sens contraire du second convoyeur, pour l'égouttage statique et la fermentation du caillé et l'obtention d'un préfromage propre à être filé, des caissettes transversales constituant les maillons des chaînes du second et du troisième convoyeur, ouvertes sur le dessus et sur l'un de leurs grands côtés, pour la formation de pains de caillé et leur égouttage statique, des moyens de transfert accompagné et de renversement des pains du second convoyeur au troisième et des moyens de décharge accompagnée des pains du troisième convoyeur.

L'invention concerne enfin un élément constituant un maillon de chaîne d'un convoyeur sans fin pour l'égouttage de caillé de fromage. L'élément, selon la revendication 9, se présente sous forme d'une caissette de forme générale parallélépipédique ouverte sur le dessus et sur l'un de ses grands côtés, la caissette comprenant un fond consistant en une lame horizontale rectangulaire recourbée vers le bas sur ses grands côtés, des plaques verticales fixées à la lame sur ses petits côtés constituant les parois latérales, renforcées en-dessous du plan de la lame et une plaque verticale adjacente aux parois latérales constituant la paroi arrière.

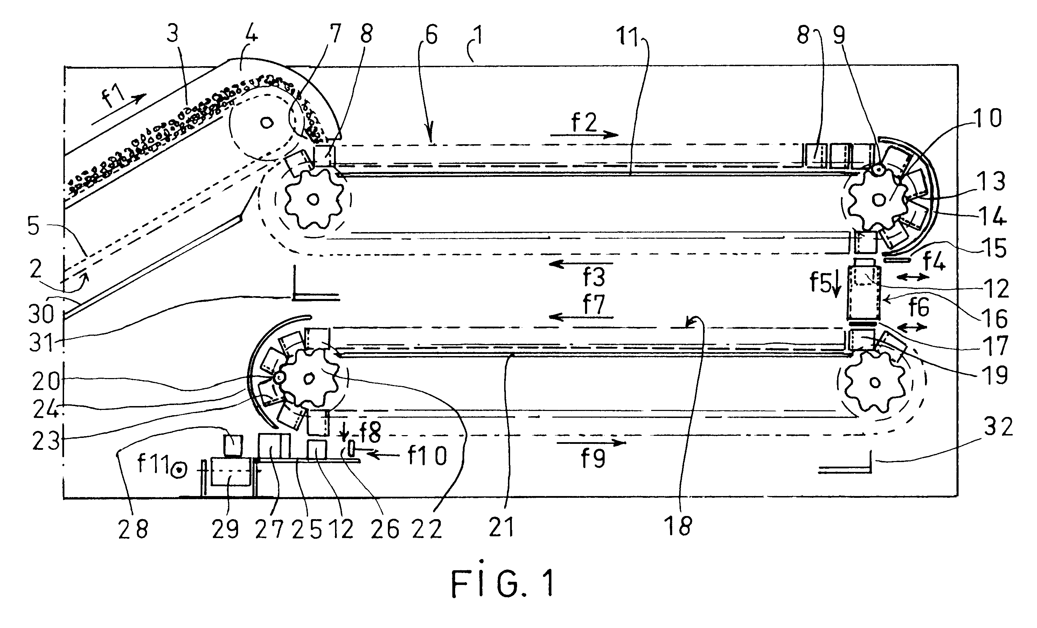

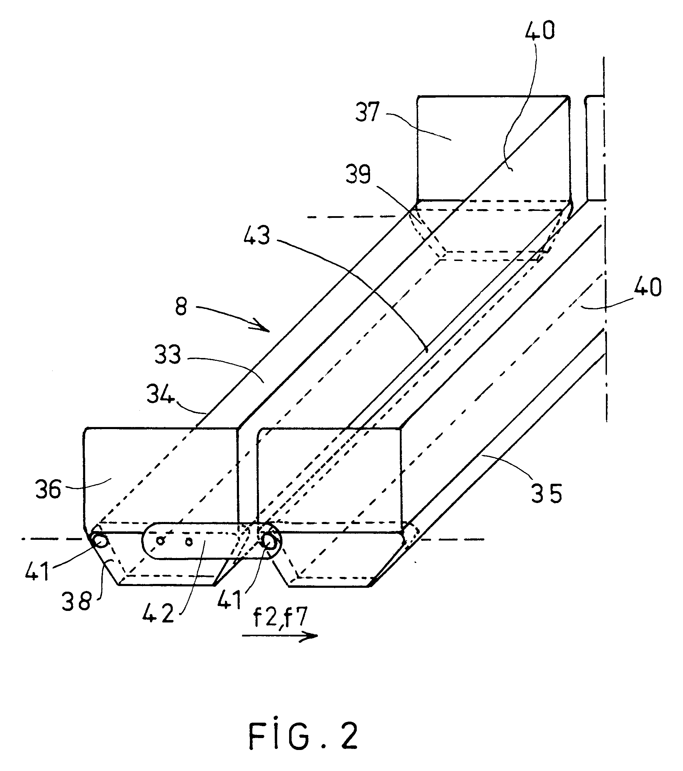

L'invention sera mieux comprise à l'aide de la description ci-après d'un mode de réalisation donné à titre d'exemple en regard des dessins annexés dans lesquels: la figure 1 est une vue schématique de l'appareil et la figure 2 est une vue en perspective d'une caissette montrant son agencement dans une chaîne sans fin.

L'appareil comprend une enceinte fermée 1 qui entoure complètement un premier convoyeur élévateur 2 à chaîne sans fin qui transporte le caillé en grains 3 préalablement débarrassé du petit-lait, le caillé ayant été formé par coagulation du lait, puis découpé.

Le lit de caillé chemine ainsi suivant la flèche f1 entre des parois fixes 4 disposées de chaque côté d'un tapis perforé 5. Le lit de caillé est ensuite déversé sur le second convoyeur horizontal 6 par l'intermédiaire de la chute 7.

Le second convoyeur 6 comporte une chaîne sans fin dont les caissettes 8 constituent les maillons. Les caissettes sont articulées entre elles et entraînées par l'intermédiaire de galets 9 (dont un seul est représenté par souci de clarté de la figure) par la poulie d'entraînement à engrenage 10. Le caillé est déversé dans les caissettes 8 en début de chaîne et transporté dans la direction de la flèche f2 sans subir de vibrations ni de secousses, par le fait que les galets 9 roulent sur les glissières fixes 11. En arrivant en fin de chaîne, le caillé est ressoudé en pains du fait de la synérèse. Les caissettes 8 basculent pour amorcer le retour du brin de chaîne suivant la flèche f3. Durant cette opération, un pain 12 est supporté par la paroi arrière 13 de la caissette 8 et la plaque de guidage courbe 14 le maintient jusqu'à ce que la chaîne suive le trajet rectiligne de retour.

Au début du brin de retour de la chaîne, le pain 12 est retourné et repose d'abord sur la tablette escamotable 15 animée d'un mouvement de va et vient suivant la flèche f4, qui est alors dans sa position avancée, puis la tablette est ensuite retirée dans la position représentée. Le pain 12 est alors libéré et tombe par gravité suivant la flèche f5 au travers du tunnel de guidage 16 pour être pris en charge par la tablette 17 escamotable suivant la flèche f6 qui est dans un premier temps dans sa position avancée. Le pain 12 est ensuite déchargé par gravité sur le troisième convoyeur horizontal 18 dans la caissette 19 lorsque la tablette 17 est retirée.

Le convoyeur 18 comporte des caissettes 19 et est entraîné, de la même manière que le convoyeur 6, mais en sens contraire selon la flèche f7, par l'intermédiaire des galets 20 (dont un seul est représenté pour des raisons de clarté) roulant sur la glissière fixe 21 et repris par la poulie d'entraînement à engrenage 22. De cette manière, l'égouttage des pains 12 se poursuit, puis en fin de chaîne les caissettes 19 basculent et un pain 12 est supporté par la paroi arrière 23 de la caissette 19 et maintenu par la plaque courbe de guidage 24, puis déchargé sur la table 25 selon la flèche f8 et le brin de retour ramène les caissettes vides suivant la flèche f9. Les poussoirs 26 avancent selon la flèche f10 et amènent les pains 12 contre les couteaux 27 (fixes comme représenté ou rotatifs circulaires) qui les découpent en blocs 28 et poussent les blocs sur le convoyeur à bande sans fin 29. Les blocs 28 sont ensuite évacués transversalement suivant la flèche f11 vers le poste de filage non représenté. Des gouttières 30, 31 et 32 sont placées en dessous des convoyeurs 2,6 et 18 pour recueillir et évacuer le petit-lait.

A la figure 2, une caissette 8, de forme générale parallélépipédique comprend un fond 33 consistant en une lame horizontale rectangulaire recourbée vers le bas sur ses grands côtés 34,35. Des plaques verticales fixées à la lame sur ses petits côtés, constituent les parois latérales 36 et 37 de la caissette. Dans leur partie située en-dessous du plan de la lame, les parois latérales 36 et 37 sont renforcées, c'est-à-dire qu'elles se prolongent par des plaques 38 et 39 plus épaisses que leur partie au-dessus du plan de la lame. La caissette comprend en outre une plaque verticale 40 adjacente aux parois latérales 36 et 37 constituant la paroi arrière, vu dans le sens de cheminement des convoyeurs 6 et 18.

Dans une chaîne, une caissette est articulée autour de l'axe de pivotement 41 qui est également l'axe du galet associé (non représenté pour la clarté de la figure). Une caissette est ainsi reliée de chaque côté à la caissette précédente par un élément de liaison 42 solidaire de la plaque 38 (seule l'articulation antérieure est représentée), de telle manière qu'il y ait une fente 43 entre deux caissettes pour l'écoulement du peit-lait. Le dos de la paroi arrière 40 d'une caissette constitue la paroi avant de la caissette précédente, vu dans le sens de cheminement de la chaîne. Cet agencement facilite l'écoulement du petit-lait formé lors de l'égouttage par la fente 43 par effet de paroi.

## Revendications

1. Procédé de fabrication de fromage dans lequel après ensemencement et caillage du lait, découpage du caillé et séparation du petit-lait, on transfère rapidement le caillé en grains sur un premier convoyeur (2) élévateur à chaîne sans fin, et on transfère le caillé en grains sur un second et troisième convoyer (6, 18) à chaîne sans fin sur lesquels on réalise l'égouttage et la fermentation lactique en mouvement et en continu, puis on décharge le caillé égoutté, caractérisé par le fait que l'on réalise un égouttage statique du caillé qui a lieu successivement sur le second convoyeur à chaîne sans fin horizontal, puis sur le troisième convoyeur à chaîne sans fin horizontal placé au-dessous du second et cheminant dans le sens contraire de celui du second et pendant lequel on forme des pains dans des caissettes (8) constituant les maillons des chaînes, du second et troisième convoyeur, ouvertes au-dessus et sur l'un de leurs grands côtés de manière à réaliser l'égouttage statique propre à l'obtention de préfromage apte à être filé tout en transportant les pains et que le transfert et le renversement des pains du convoyeur du dessus au convoyeur du dessous, puis leur décharge sont accompagnés intégralement de manière qu'ils ne subissent pas de contraintes mécaniques.

2. Procédé selon la revendication 1, caractérisé par le fait que, une fois terminé l'égouttage statique, l'on décharge, puis l'on découpe les pains en blocs et que l'on évacue les blocs transversalement par rapport à la direction de mouvement du convoyeur.

3. Appareil de fabrication de fromage, comprenant un premier convoyeur (2) élévateur à chaîne sans fin pour le transfert du caillé en grains et la décharge des grains, un second convoyeur (6) à chaîne sans fin horizontal, puis un troisième convoyeur (18) à chaîne sans fin horizontal situé sous le second convoyeur et cheminant en sens contraire du second convoyeur, caractérisé par le fait qu'il comprend, pour un égouttage statique et la fermentation du caillé et l'obtention d'un préfromage propre à être filé, des caissettes transversales (8) constituant les maillons des chaînes du second et du troisième convoyeur, ouvertes au-dessus et sur l'un de leurs grands côtés, pour la formation de pains de caillé et leur égouttage statique, des moyens de transfert accompagné et de renversement des pains du second convoyeur au troisième et des moyens de décharge accompagnée des pains du troisième convoyeur.

4. Appareil selon la revendication 3, caractérisé par le fait qu'une caissette est articulée à la caissette précédente et à la caissette suivante et constitue ainsi un maillon de la chaîne, qu'elle comprend un fond consistant en une lame horizontale rectangulaire, des parois latérales verticales fixées à la lame et une plaque verticale adjacente aux parois latérales constituant la paroi arrière, vu dans la direction de cheminement de la chaîne et que le dos de la paroi arrière de la caissette précédente fait office de paroi avant de la caissette.

5. Appareil selon la revendication 4, caractérisé par le fait que les lames sont espacées pour laisser entre elles une fente autorisant l'écoulement du petit-lait, mais pas le passage du caillé.

6. Appareil selon la revendication 3, caractérisé par le fait que les moyens de transfert accompagné et de renversement des pains du second convoyeur au troisième comprennent:
une plaque courbe de guidage des pains enveloppant la poulie d'entraînement du second convoyeur,
une première tablette escamotable au début du brin de retour du second convoyeur et juste en-dessous de celui-ci, destinée à recueillir un pain tombant d'un compartiment dans sa position avancée, puis à le décharger dans sa position retirée,
une seconde tablette escamotable à la verticale de la première tablette et juste au-dessus du brin d'aller du troisième convoyeur, recueillant le pain dans sa position avancée, puis le déchargeant dans un compartiment du troisième convoyeur dans sa position retirée et
des plaques de guidage vertical du pain de la première tablette à la seconde tablette.

7. Appareil selon la revendication 3, caractérisé par le fait que les moyens de décharge accompagnée des pains du troisième convoyeur comprennent
une plaque courbe de guidage des pains enveloppant la poulie d'entraînement du troisième convoyeur.

8. Appareil selon la revendication 3, caractérisé par le fait qu'il comprend en outre des moyens de tranchage des pains en blocs et des moyens d'évacuation des blocs transversalement par rapport a la direction de mouvement du troisième convoyeur.

9. Elément constituant un maillon de chaîne d'un convoyeur sans fin pour l'égouttage de caillé de fromage, qui se présente sous forme d'une caissette de forme générale parallélépipédique ouverte sur le dessus et sur l'un de ses grands côtés, caractérisé par le fait que la caissette comprend un fond (33) consistant en une lame horizontale rectangulaire recourbée vers le bas sur ses grands côtés, des plaques verticales fixées à la lame sur ses petits côtés constituant les parois latérales, renforcées en-dessous du plan de la lame et une plaque verticale adjacente aux parois latérales constituant la paroi arrière.

## Claims

1. A process for the production of cheese in which, after inoculation and clotting of the milk, cutting of the curd and separation of the whey, the curd is rapidly transferred in the form of grains to a first endless elevating chain conveyor (1) and the curd is transferred in the form of grains to second and third endless chain conveyors (6,18) on which drainage and lactic fermentation take place continuously and in motion, after which the drained curd is discharged, characterized in that the curd is subjected to static drainage which takes place successively on the second horizontal endless chain conveyor and then on the third horizontal endless chain conveyor positioned below the second and travelling in the opposite direction to the second and during which loaves are formed in compartments (8) forming the links of the second and third chain which are open on top and on one of their long sides so that static drainage can be carried out under conditions suitable for the formation of a pre-cheese capable of being subjected to stringing while, at the same time, the loaves are transported and in that the transfer and inversion of the loaves from the upper conveyor to the lower conveyor and their discharge are integrally supported so that they do not undergo any mechanical stressing.

2. A process as claimed in claim 1, characterized in that, on completion of static drainage, the loaves are discharged and then cut into blocks and the blocks are removed transversely relative to the direction of movement of the conveyor.

3. An apparatus for the production of cheese comprising a first endless elevating chain conveyor (2) for transferring the curd in the form of grains and discharging the grains, a second horizontal endless chain conveyor (6) and a third horizontal endless conveyor (18) situated beneath the second conveyor and travelling in the opposite direction to the second conveyor, characterized in that, for static drainage and fermentation of the curd and for obtaining a pre-cheese suitable for stringing, it comprises transverse compartments (8) which form the links of the chains of the second and third conveyors and which are open on top and on one of their long sides for forming loaves of curd and for the static drainage thereof, means for the supported transfer and inversion of the loaves from the second conveyor to the third conveyor and means for the supported discharge of the loaves from the third conveyor.

4. An apparatus as claimed in claim 3, characterized in that a compartment is pivotally connected to the preceding compartment and to the following compartment and thus forms a link of a chain, in that it comprises a base consisting of a rectangular horizontal strip, vertical side walls fixed to the strip and a vertical plate adjacent the side walls forming the rear wall relative to the direction of travel of the chain and in that the back of the rear wall of the preceding compartment forms the front wall of the compartment.

5. An apparatus as claimed in claim 4, characterized in that the strips are spaced to form a slot allowing the whey to flow through, but not the curd to pass through.

6. An apparatus as claimed in claim 3, characterized in that the means for the supported transfer and inversion of the loaves from the second conveyor to the third conveyor comprise:
a curved guide plate for the loaves surrounding the sprocket wheel of the second conveyor,
a first bar which is retractable at the beginning of the return flight of the second conveyor and just below the second conveyor and which is intended to collect a loaf falling from a compartment in its advanced position and to discharge it in its retracted position,
a second retractable bar perpendicular to the first bar and just above the forward flight of the third conveyor, collecting the loaf in its advanced position and then discharging it into a compartment of the third conveyor in its retracted position and
plates for vertically guiding the loaf from the first bar to the second bar.

7. An apparatus as claimed in claim 3, characterized in that the means for the supported discharge of the loaves from the third conveyor comprise
a curved plate for guiding the loaves surrounding the sprocket wheel of the third conveyor.

8. An apparatus as claimed in claim 3, characterized in that it additionally comprises means for cutting the loaves into blocks and means for transversely removing the blocks relative to the direction of movement of the third conveyor.

9. An element forming a chain link of an endless conveyor for the drainage of cheese curd which is in the form of a generally parallelepipedic compartment which is open on top and on one of its long sides, characterized in that the compartment comprises a base (33) consisting of a horizontal rectangular strip curved downwards at its two long sides, vertical plates fixed to the strip at its short sides forming the lateral walls reinforced below the plane of the strip and a vertical plate adjacent the lateral walls forming the rear wall.

## Patentansprüche

1. Verfahren zur Herstellung von Käse, in welchem man nach dem Beimpfen und Gären der Milch, Zerschneiden des Bruchs und Abtrennung der Molke den körnigen Bruch schnell auf einen ersten Endlosketten-Hebeförderer (2) umsetzt und den körnigen Bruch auf einen zweiten und dritten Endloskettenförderer (6, 18) umsetzt, auf denen man die Abtropfung und die Milchsäuregärung in Bewegung und kontinuierlich vornimmt, und dann den abgetropften Bruch ablädt, dadurch gekennzeichnet, daß man eine statische Abtropfung des Bruchs vornimmt, die nacheinander auf dem ersten horizontalen Endloskettenförderer und dann auf dem dritten horizontalen Endloskettenförderer stattfindet, der unter dem zweiten angeordnet ist und sich in der dem zweiten entgegengesetzten Richtung bewegt, und während der man Laibe in Kassetten (8) formt, die die Glieder der Ketten des zweiten und dritten Förderers bilden und oben und auf einer ihrer großen Seiten offen sind, so daß die statische Abtropfung stattfindet, die die Bildung von zur Faserbildung fähigem Vorkäse unter Beförderung der Laibe gestattet, und daß das Umsetzen und das Kippen der Laibe von dem oberen Förderer auf den unteren Förderer und dann ihre Entladung vollständig so begleitet sind, daß sie keine mechanischen Spannungen erleiden.

2. Verfahren nach Anspruch 1, dadurch gekennzeichnet, daß man die Laibe nach Beendigung des statischen Abtropfens ablädt und dann in Blöcke schneidet und daß man die Blöcke quer zu der Bewegungsrichtung des Förderers abführt.

3. Vorrichtung zur Herstellung von Käse, umfassend einen ersten Endlosketten-Hebeförderer (2) für dass Umsetzen des körnigen Bruchs und das Abladen der Körner, einen zweiten horizontalen Endloskettenförderer (6) und einen dritten horizontalen Endloskettenförderer (18), der unter dem zweiten Förderer gelegen ist und sich in der dem zweiten Förderer entgegengesetzten Richtung bewegt, dadurch gekennzeichnet, daß sie für eine statische Abtropfung und die Gärung des Bruchs und die Herstellung eines zur Faserbildung fähigen Vorkäses, Querkassetten (8), die die Kettenglieder des zweiten und des dritten Förderers bilden und oben und auf einer ihrer großen Seiten offen sind, für die Formung von Bruchlaiben und ihre statische Abtropfung, Mittel zum begleiteten Umsetzen und Kippen der Laibe vom zweiten Förderer auf den dritten und Mittel zum begleiteten Entladen der Laibe vom dritten Förderer besitzt.

4. Vorrichtung nach Anspruch 3, dadurch gekennzeichnet, daß eine Kassette an der vorhergehenden Kassette und an der folgenden Kassette angelenkt ist und so ein Glied der Kette bildet, daß sie einen Boden, der aus einer rechteckigen horizontalen Lamelle besteht, vertikale Seitenwände, die an der Lamelle befestigt sind, und eine an die Seitenwände anschließende vertikale Platte besitzt, die, in der Richtung der Vorbewegung der Kette gesehen, die Rückwand bildet, und daß die Rückseite der Rückwand der vorhergehenden Kassette als vordere Wand der Kassette dient.

5. Vorrichtung nach Anspruch 4, dadurch gekennzeichnet, daß die Lamellen voneinander entfernt sind, um zwischen sich einen Schlitz freizulassen, der das Ablaufen der Molke, jedoch nicht den Durchgang des Bruchs gestattet.

6. Vorrichtung nach Anspruch 3, dadurch gekennzeichnet, daß die Mittel zum begleiteten Umsetzen und Kippen der Laibe vom zweiten Förderer auf den dritten Förderer folgendes umfassen: eine gekrümmte Platte zur Führung der Laibe, die die Antriebsscheibe des zweiten Förderers umhüllt, eine erste wegrückbare Ablage am Anfang des zurückkehrenden Trumms des zweiten Förderers und genau unter diesem, die dazu bestimmt ist, in ihrer vorgeschobenen Stellung einen aus einem Abteil fallenden Laib aufzunehmen und ihn dann in ihrer zurückgezogenen Stellung abzuladen,
eine zweite wegrückbare Ablage in der Vertikalen der ersten Ablage und genau über dem vorlaufenden Trumm des dritten Förderers, die in ihrer vorgeschobenen Stellung den Laib aufnimmt und ihn dann in ihrer zurückgezogenen Stellung in ein Abteil des dritten Förderers entlädt und
Platten zum vertikalen Führen des Leibs von der ersten Ablage zur zweiten Ablage.

7. Vorrichtung nach Anspruch 3, dadurch gekennzeichnet, daß die Mittel zum begleiteten Entladen der Laibe vom dritten Förderer eine gekrümmte Platte zur Führung der Laibe umfassen, die die Antriebsscheibe des dritten Förderers umhüllt.

8. Vorrichtung nach Anspruch 3, dadurch gekennzeichnet, daß sie außerdem Mittel zum Schneiden der Laibe zu Blöcken und Mittel zur Abführung der Blöcke quer zur Bewegungsrichtung des dritten Förderers umfaßt.

9. Ein ein Kettenglied eines Endlosförderers bildendes Element zum Abtropfen von Käsebruch in Form einer Kassette von allgemeiner Parallelepipedform, die auf der Oberseite und auf einer der großen Seiten offen ist, dadurch gekennzeichnet, daß die Kassette einen Boden (33), der aus einer rechteckigen horizontalen Lamelle besteht, die an ihren großen Seiten nach unten gekrümmt ist, vertikale Platten, die an der Lamelle an ihren kleinen Seiten befestigt sind und die Seitenwände bilden, die unter der Ebene der Lamelle verstärkt sind, und eine an die Seitenwände anschließende vertikale Platte besitzt, die die Rückwand bildet.
